# EUROPÄISCHE PATENTSCHRIFT

(11) **EP 1 867 211 B1**
(45) Veröffentlichungstag und Bekanntmachung des Hinweises auf die Patenterteilung: **29.07.2009**
(21) Anmeldenummer: 06723978.0
(22) Anmeldetag: 03.04.2006
(51) Int. Cl.: H05B 6/38, H05B 6/14

(54) **INDUKTIONSSPULEN-BAUEINHEIT**
INDUCTION COIL ASSEMBLY
ENSEMBLE BOBINE D'INDUCTION

(30) Priorität: 01.04.2005 DE 102005014984
(43) Veröffentlichungstag der Anmeldung: 19.12.2007
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Bockhorni & Kollegen
(86) Internationale Anmeldenummer: PCT/EP2006/003020
(87) Internationale Veröffentlichungsnummer: WO 2006/103105

(56) Entgegenhaltungen:
- US-A1- 2003 209 535

## Beschreibung

Die Erfindung betrifft eine Induktionsspulen-Baueinheit zum Erwärmen eines eine zentrische Aufnahmeöffnung für einen Schaft eines Rotationswerkzeugs enthaltenden, frei endenden Hülsenabschnitt eines Werkzeughalters, der den gleichachsig zu einer Drehachse des Werkzeughalters in der Aufnahmeöffnung sitzenden Schaft des Werkzeugs im Presssitz hält und bei Erwärmung freigibt.

Aus WO 01/89758 A1 ist es bekannt, den Hülsenabschnitt mittels einer den Hülsenabschnitt im Wesentlichen gleichachsig umschließenden, ringförmigen Spulenanordnung auf induktivem Wege zu erwärmen. Die Spulenanordnung ist an einen Hochfrequenz-Wechselstromgenerator angeschlossen und induziert in dem metallischen Hülsenabschnitt Wirbelströme, die den Hülsenabschnitt erwärmen. An den Stirnseiten und am Außenumfang der Spulenanordnung sind zur Konzentration des Magnetflusses Magnetfluss-Konzentratorelemente aus weichmagnetischem, elektrisch im Wesentlichen nicht leitenden Material, wie zum Beispiel Ferrit oder dergleichen angeordnet, die den von der Spulenanordnung erzeugten Magnetfluss auf den Hülsenabschnitt des Werkzeughalters, und insbesondere in den Bereich des freien Endes des Hülsenabschnitts lenken. Die dem freien Ende des Hülsenabschnitts benachbarten Bereiche der Konzentrator-Anordnung sind durch radial bewegliche Elemente gebildet. Die von diesen Elementen umschlossene Durchtrittsöffnung kann auf diese Weise dem Durchmesser des Werkzeughalters angepasst werden. Die Elemente liegen im Betrieb auf der axialen Stirnfläche des freien Stirnendes des Hülsenabschnitts auf und legen damit im Erwärmungsbetrieb die axiale Position der Spulenanordnung und der mit ihr ansonsten zu einer Baueinheit verbundenen Konzentratoranordnung relativ zu dem freien Ende des Hülsenabschnitts fest. Auf diese Weise lässt sich die Induktionsspulen-Baueinheit relativ zu dem Werkzeughalter reproduzierbar axial positionieren.

Aus DE 101 57 432 A1 ist eine ähnliche Induktionsspulen-Baueinheit bekannt, bei der jedoch die den Hülsenabschnitt im Erwärmungsbetrieb umschließende, ringförmige Spulenanordnung zwei in einem festen axialen Abstand zueinander angeordnete Wicklungsbereiche umfasst. Der Bereich axial zwischen den beiden Wicklungsbereichen ist wicklungsfrei. Auf diese Weise wird erreicht, dass sich der Hülsenabschnitt in seinem mittleren Bereich weniger erwärmt als in seinen Endbereichen.

Der Hülsenabschnitt des Werkzeughalters hat eine seinem Verwendungszweck angepasste axiale Länge und der Durchmesser des Hülsenabschnitts ist entsprechend dem Durchmesser des Werkzeugschafts gewählt. Bei herkömmlichen Induktionsspulen-Baueinheiten kann allenfalls der durch die Magnetfluss-Konzentratoranordnung bestimmte Durchmesser der Durchtrittsöffnung für den Werkzeugschaft dem zu erwärmenden Werkzeughalter angepasst werden. Da die Spulenanordnung eine festgelegte, gleichbleibende axiale Länge hat, muss entweder die Spulenanordnung ausgetauscht werden oder aber es wird in Kauf genommen, dass ein für das Spannen des Werkzeugschafts nicht benutzter Bereich des Werkzeughalters mit erwärmt wird.

Es ist Aufgabe der Erfindung, eine Induktionsspulen-Baueinheit zu schaffen, mit deren Hilfe Werkzeughalter trotz unterschiedlicher axialer Länge des zu erwärmenden Bereichs des Hülsenabschnitts gleichmäßig erwärmt werden können.

Die Erfindung geht von einer Induktionsspulen-Baueinheit aus, die umfasst:
- eine im Erwärmungsbetrieb den Hülsenabschnitt im Wesentlichen gleichachsig umschließende, ringförmige Spulenanordnung,
- eine zumindest in die Nähe des freien Endes des Hülsenabschnitts des Werkzeughalters reichende Magnetfluss-Konzentratoranordnung aus weichmagnetischem, elektrisch im Wesentlichen nicht leitenden, Material auf der dem freien Ende des Hülsenabschnitts benachbarten Seite der Spulenanordnung,
- mit dem Werkzeughalter zusammenwirkende Anschlagmittel, die im Erwärmungsbetrieb die axiale Position der Spulenanordnung und der Konzentratoranordnung relativ zu dem freien Ende des Hülsenabschnitts festlegen. Die vorstehend angegebene Aufgabe wird erfindungsgemäß dadurch gelöst, dass die Spulenanordnung zwei zueinander gleichachsig, jedoch mit betriebsmäßig änderbarem axialen Abstand voneinander angeordnete Spuleneinheiten aufweist oder/und dass eine zweite Magnetfluss-Konzentratoranordnung aus weichmagnetischem, elektrisch im Wesentlichen nicht leitenden Material auf der dem freien Ende des Hülsenabschnitts fernen Seite der Spulenanordnung vorgesehen ist, deren axialer Abstand zur erstgenannten Konzentratoranordnung betriebsmäßig änderbar ist und dass Einstellmittel vorgesehen sind, die es erlauben, die axiale Position der beiden Spuleneinheiten oder/und der beiden Konzentratoranordnungen relativ zueinander, sowie die axiale Position zumindest einer der beiden Spuleneinheiten oder/und zumindest einer der beiden Konzentratoranordnungen relativ zu den Anschlagmitteln wählbar einzustellen.

Durch diese Maßnahme kann der Bereich, in welchem der von der Spulenanordnung erzeugte Magnetfluss in dem Hülsenabschnitt Wirbelströme erzeugt, die den Hülsenabschnitt erwärmen, mit Bezug auf das freie Ende des Hülsenabschnitts definiert gewählt und positioniert werden. Die Induktionsspulen-Baueinheit kann damit an Werkzeughalter mit unterschiedlich langem Spannbereich des Hülsenabschnitts gezielt angepasst werden.

Die beiden Spuleneinheiten bzw. Konzentrator-Anordnungen sind zweckmäßigerweise relativ zueinander oder gegebenenfalls zu einem Gehäuse oder einer Halterung der Induktionsspulen-Baueinheit arretierbar, so dass der axiale Abstand der Spuleneinheiten bzw. Konzentrator-Anordnungen sich auf Grund der Magnetkräfte nicht ändern kann. Hierbei kann vorgesehen sein, dass die axiale Position beider Spuleneinheiten oder/und beider Konzentratoranordnungen relativ zu den Anschlagmitteln arretierbar verändert werden kann. In einer bevorzugten Ausgestaltung ist jedoch vorgesehen, dass eine der beiden Spuleneinheiten oder/und eine der beiden Konzentratoranordnungen eine feststehende axiale Position relativ zu den Anschlagmitteln hat, und dass mittels der Einstellmittel die axiale Position der anderen der beiden Spuleneinheiten bzw. der anderen der beiden Konzentratoranordnungen relativ zu den Anschlagmitteln wählbar einstellbar ist. Dies vereinfacht den konstruktiven Aufbau der Induktionsspulen-Baueinheit und vereinfacht auch deren Handhabung im Betrieb, weil die mit den Anschlagmitteln axial fixiert verbundene Spuleneinheit bzw. Konzentratoranordnung im Betrieb in gleich bleibender axialer Position zum freien Ende des Hülsenabschnitts des Werkzeughalters angeordnet werden kann, was sich für eine gleichförmige Erwärmung des Hülsenabschnitts als vorteilhaft erwiesen hat. Vorzugsweise sind die Einstellmittel so ausgebildet, dass sie vorbestimmte axiale Positionen relativ zu den Anschlagmitteln definieren. Eine solche Indexierung erleichtert die Handhabung.

Die beiden Spuleneinheiten bzw. die beiden Konzentratoranordnungen können relativ zueinander axial verschiebbar geführt sein. Um auf relativ geringe Abstandsunterschiede reproduzierbar und einfach handhabbar einstellen zu können, erfolgt die Antriebsbewegung zweckmäßigerweise über ein Weguntersetzungsgetriebe, welches einen vergleichsweise großen Weg eines zum Beispiel manuell zu bedienenden Handhabungsorgans in einem vergleichsweise kleinen axialen Positionierhub der beiden Spuleneinheiten bzw. der beiden Konzentratoranordnungen relativ zueinander umsetzt, in einer besonders einfachen Ausgestaltung ist vorgesehen, dass die beiden Spuleneinheiten oder/und die beiden Konzentratoranordnungen relativ zueinander axial beweglich geführt sind und über wenigstens eine um die Drehachse herumführende, schraubenlinienartige Steuerfläche axial aneinander abgestützt sind. Der Außenumfang der Spuleneinheiten bzw. Konzentratoranordnungen ist relativ groß, so dass sich eine hinreichend große Untersetzung der Bewegung des Außenumfangs relativ zum axialen Hub ergibt. Die Steuerfläche ist zweckmäßigerweise axial beiderseits begrenzt, beispielsweise als schraubenartiger Schlitz ausgebildet, so dass die Steuerfläche in axial beiden Richtungen wirksam ist. Bevorzugt sind in Umfangsrichtung verteilt mehrere derartiger Steuerflächen vorgesehen, um zum Verkanten führende Radialkräfte zu symmetrieren. Es versteht sich, dass die Steuerbewegung gegebenenfalls auch von einem Stellmotor angetrieben werden kann.

Wie bereits erläutert, können im Betrieb zwischen den beiden Spuleneinheiten bzw. Konzentratoranordnungen Axialkräfte auf Grund des Magnetflusses auftreten, die durch eine Arretierung aufgefangen werden müssen. Dies lässt sich in sehr einfacher Weise dadurch erreichen, dass die wenigstens eine Steuerfläche in vorbestimmten axialen Positionen der beiden Spuleneinheiten bzw. der beiden Konzentratoranordnungen relativ zueinander in achsnormalen Ebenen verlaufende Steuerflächenabschnitte aufweisen, die die Spuleneinheiten bzw. die Konzentratoranordnungen axial arretieren. Die achsnormalen Steuerflächenabschnitte wirken selbsthemmend.

Jede Spuleneinheit ist bevorzugt mit der auf ihrer Seite angeordneten Konzentratoranordnung axial fest verbunden. Die Konzentratoranordnungen sind hierbei bevorzugt so ausgebildet, dass sie das Magnetfeld der Spulenanordnung nach außen weitgehend abschirmen. Wenigstens eine der beiden Konzentratoranordnungen umfasst deshalb radial außerhalb der Spulenanordnung einen axial zur anderen Konzentratoranordnung vorstehenden Bereich, der mit der anderen Konzentratoranordnung im Wesentlichen im gesamten Bereich der axial änderbaren Positionen axial überlappt. Zweckmäßigerweise haben beide Konzentratoranordnungen aufeinander zu vorstehende Hülsenbereiche, die koaxial teleskopierbar ineinander greifen. Es versteht sich, dass die ineinander greifenden Bereiche auch durch ineinander greifende Fingerstrukturen realisiert sein können.

Zumindest die dem freien Ende des Hülsenabschnitts des Werkzeughalters axial benachbarte, erste Konzentratoranordnung, vorzugsweise aber auch die zweite Konzentratoranordnung kann in Umfangsrichtung um die Drehachse herum mehrere radial über den Innenumfang der Induktionsspulenanordnung nach innen vorstehende, relativ zueinander bewegliche Konzentratorelemente aus dem weichmagnetischen, elektrisch im Wesentlichen nicht leitende Material aufweisen, deren radialer Überstand zur Drehachse hin über den Innenumfang der Induktionsspulenanordnung betriebsmäßig änderbar ist. Bei einer solchen Induktionsspulen-Baueinheit lässt sich nicht nur die axiale Wirkungslänge der Wirbelstromerwärmung einstellen, sondern auch der Magnetfluss gezielt dem freien Ende des Hülsenabschnitts zuführen. Geeignete Gestaltungen der Konzentratorelemente sind in WO 01/89758 A1 beschrieben. Als besonders geeignet haben sich Konzentratorelemente erwiesen, die um parallel zur Drehachse verlaufende Schwenkachsen relativ zur Induktionsspulenanordnung schwenkbar sind, da Schwenkführungen weniger zum Verklemmen neigen als Schiebeführungen. Insbesondere geeignet sind Konzentratorelemente, die angenähert die Form von Scheiben haben, die mit einem ersten Rand unter Bildung einer Durchtrittsöffnung für den Hülsenabschnitt des Werkzeughalters der Drehachse gegenüberliegen und sich mit einem schräg zu dem ersten Rand verlaufenden zweiten Rand entlang des ersten Rands eines in Umfangsrichtung benachbarten Konzentratorelements erstrecken. Auf diese Weise verbleiben in Umfangsrichtung zwischen benachbarten Konzentratorelementen keine oder nur sehr schmale Spalten, selbst wenn sich die Konzentratorelemente nicht überlappen und die Schwenkbewegung der Konzentratorelemente um ihre Schwenkachsen lässt sich relativ leichtgängig steuern.

In einer bevorzugten Ausgestaltung, die auch selbständige erfinderische Bedeutung hat, also auch bei anderen als den vorstehend erläuterten Induktionsspulen-Baueinheiten eingesetzt werden kann, ist vorgesehen, dass die Scheiben der Konzentratorelemente achsnormal zu ihren Schwenkachsen im Wesentlichen fluchten und sich der erste und der zweite Rand benachbarter Konzentratorelemente zumindest auf einem Teil ihrer Länge in Umfangsrichtung überlappen, insbesondere verschränkt überlappen, und dass die Konzentratoranordnung zwei Gruppen in Umfangsrichtung einander abwechselnder Konzentratorelemente umfasst, wobei die Anordnung so getroffen ist, dass der radiale Überstand der Konzentratorelemente der ersten Gruppe über den Innenumfang der Induktionsspulenanordnung bei gleicher Winkelstellung größer ist als der radiale Überstand der Konzentratorelemente der zweiten Gruppe. In dieser Ausgestaltung können nur die Konzentratorelemente der ersten Gruppe an den Umfang des Hülsenabschnitts angelegt werden, während die Konzentratorelemente der zweiten Gruppe mit ihrem ersten Rand nach radial außen versetzt sind, ohne den maximalen Durchmesser der von den Konzentratorelementen der ersten Gruppe begrenzten Durchtrittsöffnung zu verringern, kann auf diese Weise der minimale Durchmesser kleiner bemessen werden, und dementsprechend können mittels der Induktionsspulen-Baueinheit auch Hülsenabschnitte mit vergleichsweise kleinem Durchmesser erwärmt werden.

Vorzugsweise tragen die Konzentratorelemente der ersten Gruppe an ihrem ersten Rand die Anschlagmittel bildende Anschlagelemente für die axiale Positionierung der Konzentratoranordnung und der mit ihr verbundenen Induktionsspulenanordnung relativ zu dem Werkzeughalter. Auch hier sind die Anschlagmittel selbst dann noch wirksam, wenn der Durchmesser des Hülsenabschnitts vergleichsweise klein ist. Allerdings können bei Bedarf auch separate Anschlagelemente vorgesehen sein.

Die Konzentatorelemente sind zweckmäßigerweise mittels eines gemeinsamen, gleichachsig zur Induktionsspulenanordnung drehbaren Steuerelements, das über Steuerflächen-Nockenfolger-Anordnungen mit den Konzentratorelementen gekuppelt ist, verstellbar.

Als besonders günstig hat es sich erwiesen, wenn das Steuerelement mit einer der beiden Spuleneinheiten, insbesondere der dem freien Ende des Hülsenabschnitts benachbarten Spuleneinheit drehfest verbunden ist. Auf diese Weise kann mit ein und demselben Steuerelement sowohl die axiale Positionierung der beiden Spuleneinheiten bzw. Konzentratoranordnungen als auch die Größe der Durchtrittsöffnung für den Werkzeughalter eingestellt werden. Auch hier kann das Steuerelement manuell betätigbar sein oder mittels eines Stellmotors antreibbar sein. Allerdings ist diese Kopplung nicht zwingend, vielmehr kann die Steuerung der Konzentratoranordnungen auch isoliert von der Steuerung der axialen Positionierung der beiden Spuleneinheiten vorgenommen werden, in dem beispielsweise zwischen der Steuerscheibe und dem Führungsring für die Axialverstellung der beiden Spuleneinheiten eine Kupplung vorgesehen wird, die beispielsweise durch Raststifte gebildet sein kann. Beim Eindrücken der Raststifte würde die Steuerscheibe mit dem Führungsring gekoppelt werden. Im Falle des ausgerückten Raststifts bzw. ausgerückter Raststifte wäre allerdings dann die Steuerscheibe vom Führungsring für die axiale Verstellung der beiden Spuleneinheiten entkoppelt und würde eine Drehung der Steuerscheibe nur zu einer Verstellung der Konzentratoranordnungen führen.

Die Spulenanordnung wird aus einem vorzugsweise hochfrequenten Strom liefernden Wechselstromgenerator gespeist. Die Stromstärke oder/und die Frequenz oder/und die Spannung wie gegebenenfalls auch die Zeitspanne, in welcher die Spulenanordnung erregt wird, wird in an sich bekannter Weise durch eine Steuerung des Wechselstromgenerators vorgegeben, und zwar abhängig von der Größe bzw. Art des Werkzeughalters, um Überhitzungsschäden an dem Werkzeughalter zu vermeiden. In einer bevorzugten Ausgestaltung ist den Spuleneinheiten oder/und den Konzentratoranordnungen wenigstens ein Positionssensor zugeordnet, der ein dem axialen Abstand der Spuleneinheiten oder/und der Konzentratoranordnungen oder/und dem radialen Überstand wenigstens der ersten Konzentratoranordnung über den Innenumfang der Spulenanordnung repräsentierendes Signal erzeugt, wobei der Wechselstromgenerator abhängig von diesem Signal steuerbar ist. Bereits die gegebenenfalls manuelle Einstellung der Induktionsspulen-Baueinheit auf die Größe des Werkzeughalters legt damit selbsttätig die aus dem Wechselstromgenerator für die Erwärmung dieses Werkzeughalters zuzuführende elektrische Energie fest. Die Bedienung wird auf diese Weise vereinfacht.

Alternativ kann auch vorgesehen sein, dass der axiale Abstand der Spuleneinheiten oder/und der Konzentratoranordnungen oder/und der radiale Überstand wenigstens der ersten Konzentratoranordnung mittels wenigstens eines Positionierantriebs einstellbar ist, der abhängig von der Einstellung des Wechselstromgenerators von diesem aus gesteuert wird. Die an dem Wechselstromgenerator für den zu erwärmenden Werkzeughalter eingestellte Stromstärke oder/und Stromeinschaltdauer oder/und Spannung bestimmen auf diese Weise auch die Positionierung der Spuleneinheiten bzw. Konzentratoranordnung. Auch in diesem Fall vereinfacht sich die Bedienung. Bei dem Positionierantrieb handelt es sich bevorzugt um einen Schrittmotor-Positionierantrieb, dessen Schrittfolge ein Maß für die axialen Positionen der Spuleneinheiten bzw. Konzentratoranordnungen ist.

Es ist bekannt, die Erwärmung des Werkzeughalters mittels eines Temperatursensors zu überwachen. Das temperaturabhängige Signal des Temperatursensors kann zur Anzeige der tatsächlichen Temperatur des Hülsenabschnitts des Werkzeughalters oder aber zur schwellwertabhängigen Erzeugung eines Warnsignals oder der schwellwertabhängigen Abschaltung des Wechselstromgenerators genutzt werden. Bei herkömmlichen Induktionsspulen-Baueinheiten ist jedoch der Hülsenabschnitt für eine Temperaturmessung nur bedingt zugänglich. In einer bevorzugten Ausgestaltung der Erfindung ist vorgesehen, dass axial zwischen den Spuleneinheiten ein die Temperatur des Hülsenabschnitts des Werkzeughalters erfassender Temperatursensor angeordnet ist. Bei dieser Ausgestaltung wird ohnehin vorhandener Bauraum in einem für die Temperaturmessung des Hülsenabschnitts günstigen Bereich genutzt. Insbesondere kann der Temperatursensor gegebenenfalls auch in direktem Anlagekontakt zu der Oberfläche des Hülsenabschnitts gebracht werden, was die Messgenauigkeit erhöht.

Im Folgenden werden Ausführungsbeispiele der Erfindung anhand von Zeichnungen näher erläutert. Hierbei zeigt:
- Figur 1: einen Axiallängsschnitt durch eine zum Erwärmen eines Werkzeughalters bestimmte Induktionsspulen-Baueinheit;
- Figur 2a: eine Axialansicht auf eine Konzentratoranordnung der Baueinheit in maximal geöffneter Position;
- Figur 2b: eine Axialansicht eines Steuerelements der Konzentratoranordnung in einer der Position der Figur 2a zugeordneten Drehstellung;
- Figur 2c: eine Draufsicht auf eine Gruppe der Konzentratorenelemente;
- Figur 2d: eine Draufsicht auf ein Konzentratorelement der anderen Gruppe;
- Figur 2e: eine weitere Alternative einer Ausbildung eines Konzentratorelements in Draufsicht;
- Figur 3a: eine Draufsicht auf die Konzentratoranordnung in minimal geöffneter Position;
- Figur 3b: eine Draufsicht auf die Steuerscheibe in der Position der Figur 3a;
- Figur 4: eine teilweise aufgebrochene Radialansicht einer den Abstand von Spuleneinheiten der Baueinheit steuernden Einstellanordnung;
- Figur 5: einen Axiallängsschnitt durch eine Variante der InduktionsspulenBaueinheit und
- Figur 6: einen Axiallängsschnitt durch eine weitere Variante der Baueinheit.

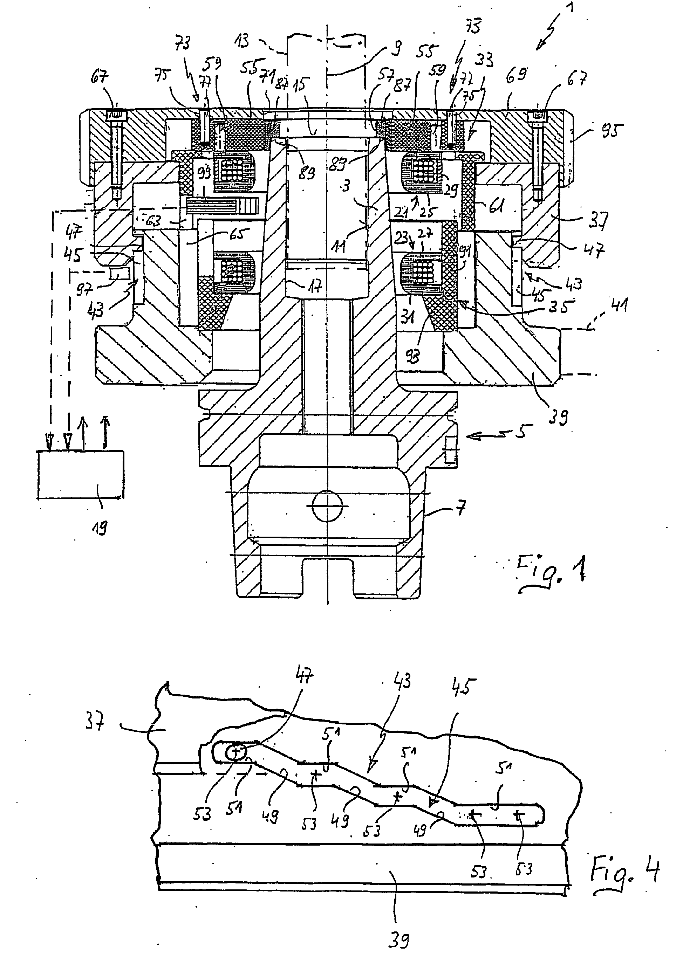

Die Figuren 1 bis 4 zeigen eine Induktionsspulen-Baueinheit 1 zum Erwärmen eines Hülsenabschnitts 3 eines Werkzeughalters 5, der mittels eines Kupplungsabschnitts 7 für den um seine Drehachse 9 rotierenden Arbeitsbetrieb mit einer nicht näher dargestellten Antriebsspindel einer Werkzeugmaschine oder dergleichen kuppelbar ist. Bei der Kupplung 7 kann es sich um eine herkömmliche, genormte Kupplung, wie zum Beispiel eine Steilkegelkupplung oder wie im dargestellten Ausführungsbeispiel um eine Hohlschaftkupplung handeln.

Der Hülsenabschnitt 3 hat zentrisch zur Drehachse 9 eine Aufnahmeöffnung 11, die im Arbeitsbetrieb einen Schaft 13 eines Rotationswerkzeugs, beispielsweise eines Bohrers oder Fräsers im Presssitz hält. Der Presssitz-Spannbereich der Aufnahmeöffnung 11 erstreckt sich in axialer Richtung nur über einen Teil der axialen Tiefe der Aufnahmeöffnung 11, und zwar über einen Bereich, der die Übertragung des erforderlichen Drehmoments und die erforderliche axiale Fixierung des Werkzeugschafts 13 sicherstellt. Dem freien Ende 15 des Hülsenabschnitts axial abgewandt schließt sich an den Spannbereich eine, wenn auch im Einzelfall nur geringfügige Durchmessererweiterung 17 an.

Der Spannbereich des Hülsenabschnitts 3 kann mittels der Induktionsspulen-Baueinheit 1 so weit erwärmt werden, dass die Aufnahmeöffnung 11 Übermaß gegenüber dem Werkzeugschaft 13 hat, der Werkzeugschaft 13 also lose in die Aufnahmeöffnung 11 eingesteckt oder aus dieser entnommen werden kann. Die Induktionsspulen-Baueinheit 1 ist hierzu an einen Wechselstromgenerator 19 angeschlossen, der ihr Wechselstrom mit einer Frequenz von beispielsweise 10 kHz oder mehr zuführt. Der von der Baueinheit 1 erzeugte, den Hülsenabschnitt 3 axial durchflutende Magnetfluss erzeugt in dem Hülsenabschnitt 3 Wirbelströme, die den Hülsenabschnitt 3 erwärmen und damit aufweiten. Nach dem Erkalten schrumpft der Hülsenabschnitt 3 auf ein den Werkzeugschaft 13 im Presssitz haltendes Maß zurück.

Um den Werkzeugschaft 13 aus dem Werkzeughalter 5 ausspannen zu können, kommt es darauf an, dass sich der Hülsenabschnitt 3 in hinreichend kurzer Zeit so weit und so gleichmäßig dehnt, dass die Aufnahmeöffnung 11 axial überall Übermaß relativ zu dem sich unter Umständen gleichfalls geringfügig dehnenden Werkzeugschaft 13 hat. Um die gleichmäßige Erwärmung des Hülsenabschnitts 3 zu gewährleisten, hat die Baueinheit 1 zwei in axialem Abstand voneinander angeordnete Spuleneinheiten 21, 23, deren auf Spulenkörper 25, 27 gewickelte Wicklungen 29, 31 den Hülsenabschnitt 3 radial außen ringförmig und im Wesentlichen konzentrisch zur Drehachse 9 umschließen. Jeder der beiden Spuleneinheiten 21, 23 ist eine Magnetfluss-Konzentratoranordnung 33 bzw. 35 zugeordnet, die bezogen auf die zugeordnete Spuleneinheit 21 bzw. 23 axial fixiert ist.

Die Spuleneinheiten 21 und 23 einschließlich der, ihnen zugeordneten Konzentratoranordnungen 33 bzw. 35 sind mit je einem Führungsring 37 bzw.39 verbunden, von denen einer, hier der Führungsring 39, wie bei 41 angedeutet, an einer gerätefesten, achsparallel zur Drehachse 9 verlaufenden, nicht näher dargestellten Führungsschiene verschiebbar geführt ist und damit eine Relativverschiebung der Baueinheit 1 relativ zu dem Werkzeughalter 5 ermöglicht. Die beiden Führungsringe 37, 39 sind aneinander um die Drehachse 9 drehbar und längs der Drehachse 9 axial verschiebbar geführt, um so den axialen Abstand der Spuleneinheiten 21, 23 einschließlich der zugehörigen Konzentratoranordnungen 33, 35 in Abhängigkeit von der Länge des Spannbereichs des Hülsenabschnitts 3 des aktuell zu erwärmenden Werkzeughalters 5 einstellen zu können.

In einander radial zugewandten Umfangsflächen der Führungsringe 37, 39 sind mehrere angenähert schraubenlinienförmig die Drehachse umschlingende Schrägflächen-Nocken-Anordungen 43 in Umfangsrichtung verteilt angeordnet, die bei einer Relativdrehung zwischen den Führungsringen 37, 39 die axiale Position der beiden Spuleneinheiten 21, 23 und der ihnen zugeordneten Konzentratoranordnungen 33, 35 in axial beiden Richtungen formschlüssig zwangsgeführt einstellen.

Figur 4 zeigt Einzelheiten der Schrägflächen-Nocken-Anordnungen 43. Jede der Schrägflächen-Nocken-Anordnungen 43 umfasst in einer der Umfangsflächen, hier der äußeren Umfangsfläche des Führungsrings 39, einen generell einer Schraubenlinie folgenden Schlitz 45, in den ein von der anderen Umfangsfläche, hier der inneren Umfangsfläche des Führungsrings 37, abstehender Nockenfortsatz 47 eingreift.

Die Schrägflächen-Nocken-Anordnungen 43 sind in Umfangsrichtung in mehrere Schrägflächenabschnitte 49 segmentiert, die durch tangentiale, in achsnormalen Ebenen verlaufende Indexierabschnitte 51 verbunden sind. Auch an beide Enden des Schlitzes 45 schließen sich Indexierabschnitte 51 an. Die Schrägflächenabschnitte 49 sorgen bei einer Relativdrehung der Führungsringe 37, 39 für eine Veränderung des axialen Abstands der Führungsringe 37, 39 und damit der Spuleneinheiten 21, 23 einschließlich der zugeordneten Konzentratoranordnungen 33, 35. Die Indexierabschnitte 51 hingegen sorgen für eine axiale Verrastung der Führungsringe 37, 39 in vorbestimmten axialen Betriebspositionen, so dass im Betrieb auf Grund des Magnetfelds der Spuleneinheiten 21, 23 auftretende axiale Kräfte die Führungsringe 37, 39 nicht verstellen können. Die Betriebspositionen 53 sind jeweils unterschiedlichen Werkzeughalterabmessungen zugeordnet, so dass die Baueinheit 1 durch simples Verdrehen der Führungsringe 37, 39 relativ zueinander auf unterschiedlich große Werkzeughalter eingestellt werden kann. Gegebenenfalls tragen die Führungsringe 37, 39 oder mit diesen Ringen verbundene Komponenten auf die Werkzeughaltertypen hinweisende Markierungen.

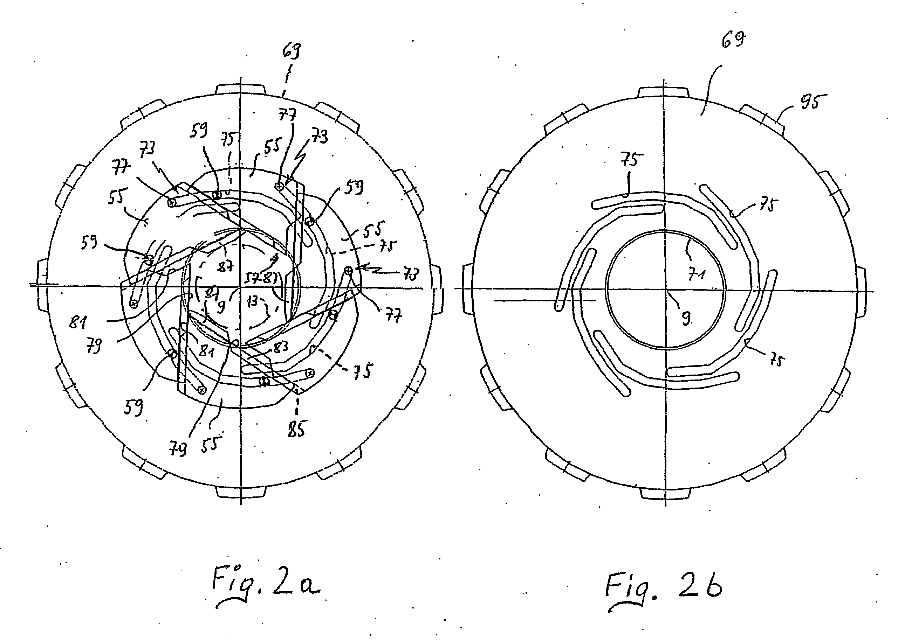

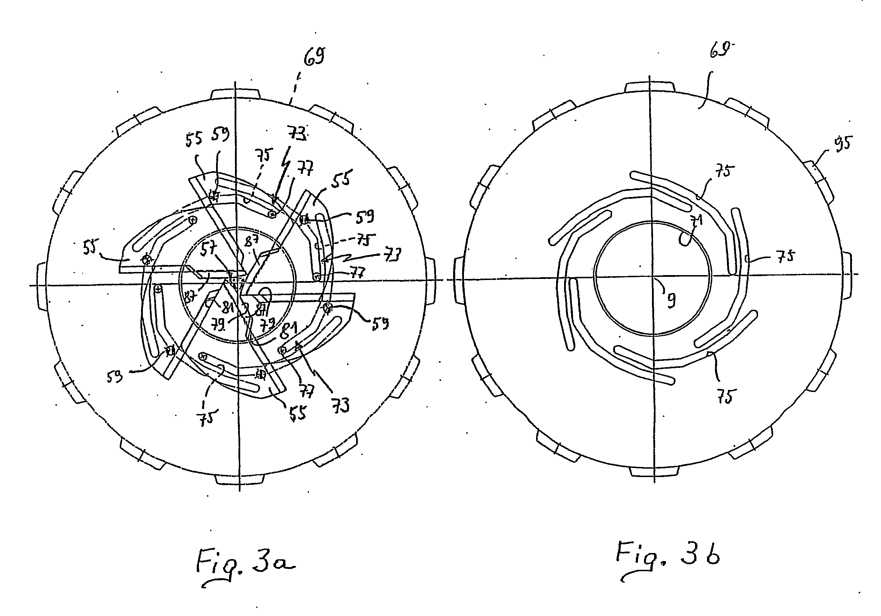

Die Konzentratoranordnungen 33, 35 konzentrieren den Magnetfluss der Spuleneinheiten 21, 31 auf den Hülsenabschnitt 3 des Werkzeughalters 5. Die dem durch eine achsnormale, ebene Stirnfläche gebildeten freien Ende 15 des Hülsenabschnitts 3 benachbarte Konzentratoranordnung 3 umfasst mehrere, in den Figuren 2a und 3a in axialer Draufsicht gezeigte Konzentratorelemente 55 , deren Scheibenflächen im Wesentlichen in achsnormalen Ebenen zueinander fluchtend angeordnet sind und eine Durchtrittsöffnung 57 für das Stirnende 15 des Hülsenabschnitts 3 begrenzen. Die Konzentratorelemente 55, die sämtlich aus weichmagnetischem, im Wesentlichen elektrisch nicht leitenden Material, zum Beispiel Ferrit, bestehen, sind an Achsstiften 59 achsparallel zur Drehachse 9 an dem Spulenkörper 25 der zum freien Stirnende 15 benachbarten Spuleneinheit 21 gelagert. An die Konzentratorelemente 55 schließt sich vorzugsweise an diesen anliegend auf der radial äußeren Seite der Spuleneinheit 21 eine zur Drehachse 9 konzentrische, zylindrische Jochhülse 61 aus dem Konzentratormaterial an, die von den Konzentratorelementen 55 zur anderen Spuleneinheit 23 axial vorsteht. Die Spuleneinheit 21 und die Jochhülse 61 sind an dem Führungsring 37 zentrisch zur Drehachse 9 drehbar, jedoch axial fixiert, gelagert. Die Jochhülse 61 einschließlich der mit ihr verbundenen Spuleneinheit 21 sind darüber hinaus axial beweglich, jedoch drehfest an dem Führungsring 39 geführt. Hierzu sind an der Jochhülse 61 ein oder mehrere axiale Schlitze 63 vorgesehen, in die jeweils ein mit dem Führungsring 39 verbundener Vorsprung 65 zur Verdrehsicherung eingreift. Es versteht sich, dass der gegebenenfalls auch als Nut ausgebildete Schlitz alternativ auch in dem Führungsring 39 vorgesehen sein kann.

An dem Führungsring 37 ist, beispielsweise mittels Schrauben 67 oder einer lösbaren Kupplung, eine Steuerscheibe 69 befestigt, die die Konzentratorelemente 55 auf der zur Spuleneinheit 21 axial abgewandten Seite überdeckt und axial fixiert. Die Steuerscheibe 69 hat, wie die Figuren 2b und 3b zeigen, eine zur Drehachse 9 zentrische Durchtrittsöffnung 71 für den Hülsenabschnitt 3 und ist über Schrägflächen-Nocken-Anordnungen 73 mit jedem der Konzentratorelemente 55 gekuppelt. Bei einer Drehbewegung der Steuerscheibe 69 relativ zu dem Führungsring 39 schwenken die Schrägflächen-Nocken-Anordnungen 73 die Konzentratorelemente 55 um die Achsstifte 59 und ändern damit den radialen Überstand der Konzentratorelemente 55 über den Innenumfang der Spuleneinheit 21 radial zur Drehachse 9 hin. Die Schrägflächen-Nocken-Anordnungen 73 sind durch angenähert spiralförmige Nuten oder Schlitze 75 in der Steuerscheibe 69 und Nockenvorsprünge 77 an den Konzentratorelementen 55 gebildet.

Wie am besten die Figuren 2a und 3 a zeigen, hat jedes der Konzentratorelemente 55 einen ersten Rand 79, mit dem es der Drehachse 9 radial gegenüber liegt, sowie einen zweiten Rand 81, der sich unter einem spitzen Winkel an das der Drehachse 9 benachbarte Ende des ersten Rands 79 anschließt. Die Ränder 79, 81 haben längs der Ränder sich erstreckende Aussparungen 83 bzw. 85, an welchen sich benachbarte Konzentratorelemente 55 in Umfangsrichtung jeweils mit ihrem ersten Rand 79 und ihrem zweiten Rand 81 verschränkt überlappen. Die Konzentratorelemente 55 bilden damit in Umfangsrichtung eine Durchtrittsöffnung 57, deren Größe durch Drehen der Steuerscheibe 67 zwischen einem maximalen Öffnungsdurchmesser (Figur 2a) und einem minimalen Öffnungsdurchmesser (Figur 3a) änderbar ist.

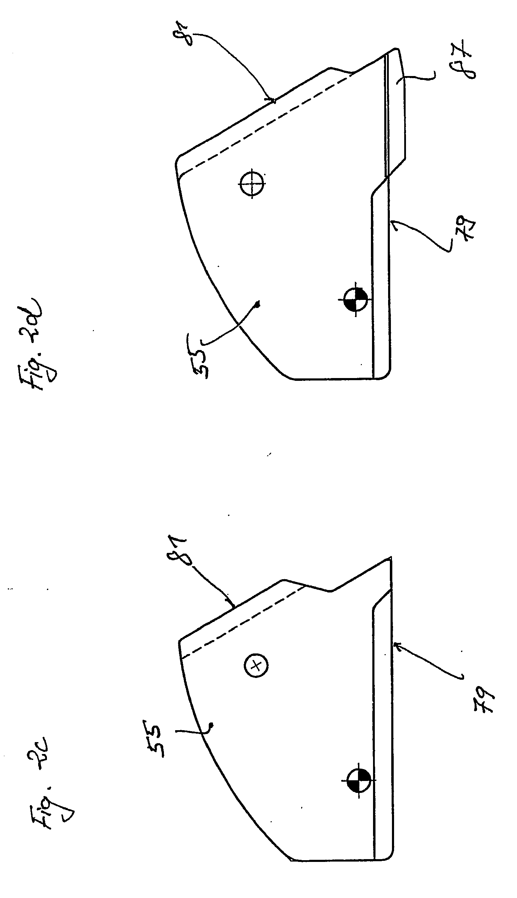

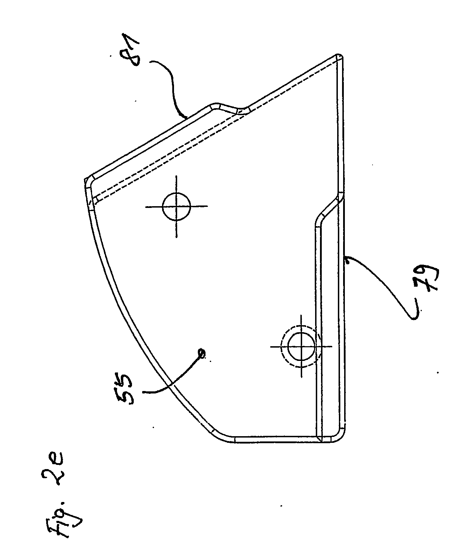

Der erste Rand 79 von in Umfangsrichtung benachbarten Konzentratorelementen 55 ist unterschiedlich gestaltet, und zwar so, dass in einer ersten Gruppe von Konzentratorelementen 55 der radiale Überstand des die Durchtrittsöffnung 57 begrenzenden Bereichs des ersten Rands 79 über den Innenumfang der Spuleneinheit 21 größer ist als der radiale Überstand des entsprechenden Bereichs einer zweiten Gruppe der Konzentratorelemente 55. Die Konzentratorelemente 55 der beiden Gruppen wechseln sich in Umfangsrichtung ab. Wie die Figuren 2a und 2b zeigen, begrenzen die radial erhabenen Bereiche 87 der Konzentratorelemente 55 die Durchtrittsöffnung 57 auf einem kleineren Durchmesserkreis als die Konzentratorelemente 55 der zweiten Gruppe. Wie Figur 3a zeigt, kann auf diese Weise der minimale Durchmesser der Durchtrittsöffnung 57 klein gehalten werden, da die Konzentratorelemente 55 der zweiten Gruppe demgegenüber radial zurücktreten. Die beiden Gruppen der Konzentratorelemente 55 ergeben sich im übrigen aus den Fig. 2c und Fig. 2d, welche eine Draufsicht zeigen, wobei insbesondere aus Fig. 2d der radiale Überstand bzw. radial erhabene Bereich 87 hervorgeht. In einer alternativen Ausgestaltung können jedoch die Konzentratorelemente 55 auch untereinander gleich ausgebildet sein, wobei eine solche Ausbildung in Fig. 2e in Draufsicht dokumentiert ist.

Die erhabenen Bereiche 87 können aus dem weichmagnetischen Material der Konzentratorelemente 55 bestehen, sind aber bevorzugt aus einem thermisch isolierendem Material, wie zum Beispiel Kunststoff oder Keramik gebildet, um die Konzentratoranordnung 33 thermisch von dem im Betrieb sich erwärmenden Hülsenabschnitt 3 zu isolieren. Die erhabenen Bereiche 87 bilden an ihren der Spuleneinheit 21 axial zugewandten Seite Anschlagflächen 89, über die die Baueinheit 1 an dem freien Stirnende 15 axial positioniert werden kann und zwar so, dass die Konzentratorelemente 55 dem Umfang oder/und der Stirnfläche im Bereich des freien Endes 15 eng benachbart sind. Die Konzentratorelemente 55 können hierbei die Umfangsfläche oder/und die Stirnfläche axial bzw. radial überlappen. Eine Notwendigkeit hierfür besteht jedoch nicht.

Die der Spuleneinheit 23 zugeordnete Konzentratoranordnung 35 umfasst gleichfalls eine Jochhülse 91, die die Spuleneinheit 23 radial außen gleichachsig zur Drehachse 9 umschließt und axial teleskopierbar in die Jochhülse 61 der Konzentratoranordnung 35 eingreift. Auf der zur Spuleneinheit 21 axial abgewandten Seite der Spuleneinheit 23 schließt sich an die Jochhülse 91 ein radial nach innen vorspringender Ringflansch 93 einteilig angeformt an. Die Jochhülse 91 und der Ringflansch 93 bestehen aus dem Konzentratormaterial. Die Spuleneinheit 23 wie auch die Konzentratoranordnung 35 sind fest mit dem Führungsring 39 verbunden. Die Jochhülsen 61, 91 sind hierbei in Umfangsrichtung im Wesentlichen geschlossen. Es versteht sich, dass anstelle ringförmig geschlossener Hülsen auch fingerartige Jochstrukturen geeignet sind, deren in Umfangsrichtung aufeinander folgende, axial sich erstreckende Finger wechselweise ineinander greifen.

Da die Steuerscheibe 69 drehfest mit dem Führungsring 37 verbunden ist, kann durch Verdrehen der zu diesem Zweck an ihrem Außenumfang mit Griffrippen 95 versehenen Steuerscheibe 69 relativ zu dem drehfest geführten Führungsring 39 in einem einzigen Bedienungsvorgang sowohl der axiale Abstand der Spuleneinheit 21, 23 als auch der Durchmesser der Durchtrittsöffnung 57 dem zu erwärmenden Werkzeughalter 5 angepasst werden. Die Bedienung der Baueinheit 1 wird dadurch vereinfacht. Allerdings kann bei Bedarf die Steuerscheibe 69 auch vom Führungsring 37 entkoppelt sein, in dem eine entsprechende Kupplung zwischen beiden Elementen vorgesehen ist. Beispielsweise könnte anstelle der Schrauben 67 auch Raststifte verwendet werden, welche in eingerückter Stellung die Steuerscheibe 69 mit dem Führungsring 37 verbinden. Bei ausgerückten Raststiften wäre die Steuerscheibe 69 dann vom Führungsring 37 entkoppelt, so dass bedarfsweise mit Drehung der Steuerscheibe nur die Konzentratoranordnungen verstellt werden können.

Die Spuleneinheiten 21, 23 sind zueinander in Serie, vorzugsweise jedoch zueinander parallel an den Wechselstromgenerator 19 angeschlossen, und zwar so, dass sie in dem Hülsenabschnitt 3 einen gleichsinnigen Magnetfluss erzeugen. Der Wechselstromgenerator 19 umfasst eine Steuerung, die die Stromstärke oder/und die Frequenz oder/und die an die Spuleneinheiten 21, 23 angelegte Spannung oder/und die Einschaltdauer des Stroms nach einem vorbestimmten Programm abhängig von der an dem Wechselstromgenerator 19 einzustellenden Größe des Werkzeughalters 5 steuert. Da die Baueinheit 1 wie vorstehend beschrieben auf die Größe des Werkzeughalters 5 durch Drehen der Steuerscheibe 69 justiert werden muss, ist in einer bevorzugten Ausgestaltung wenigstens ein Positionssensor 97 vorgesehen, der die Relativstellung der beiden Führungsringe 37, 39 in Drehrichtung oder/und in Axialrichtung erfasst und dementsprechend die Steuerung des Wechselstromgenerators 19 auf die Größe des zu erwärmenden Werkzeughalters 5 voreinstellt. Die Handhabung wird auf diese Weise noch weiter vereinfacht und automatisiert. Es versteht sich, dass der Positionssensor 97 auch auf die Relativstellungen anderer relativ zueinander sich bewegender Komponenten der Baueinheit 1 ansprechen kann, beispielsweise auf die Relativstellung der Konzentratorelemente 55 relativ zu einem stationären Teil, beispielsweise die Steuerscheibe 69.

Um eine Überhitzung des Hülsenabschnitts 3 zu vermeiden, ist axial zwischen den Spuleneinheiten 21, 23 ein Temperatursensor 99 angeordnet, z. B. an einem der Führungsringe 37 bzw. 39 angebracht, der die Temperatur am Außenumfang des Hülsenabschnitts 3 erfasst. Der Temperatursensor 99 kann so gestaltet sein, dass er an der Umfangsfläche des Hülsenabschnitts 3 gegebenenfalls federnd anliegt oder aber die Temperatur berührungslos erfasst. Der Temperatursensor 99 kann abhängig von einem vorgegebenen Grenzwert über die Steuerung des Wechselstromgenerators 19 die Stromzufuhr abschalten und zusätzlich oder alternativ ein optisches oder akustisches Warnsignal auslösen. Auch kann an einem Display der tatsächliche Wert der Temperatur angezeigt werden.

Im Folgenden werden Varianten der vorangegangen erläuterten Induktionsspulen-Baueinheit beschrieben. Gleichwirkende Komponenten sind mit den Bezugszahlen der Figuren 1 bis 4 bezeichnet und zur Unterscheidung mit einem Buchstaben versehen. Zur Erläuterung des Aufbaus und der Wirkungsweise sowie zur Erläuterung eventueller Varianten wird jeweils auf die gesamte Beschreibung Bezug genommen.

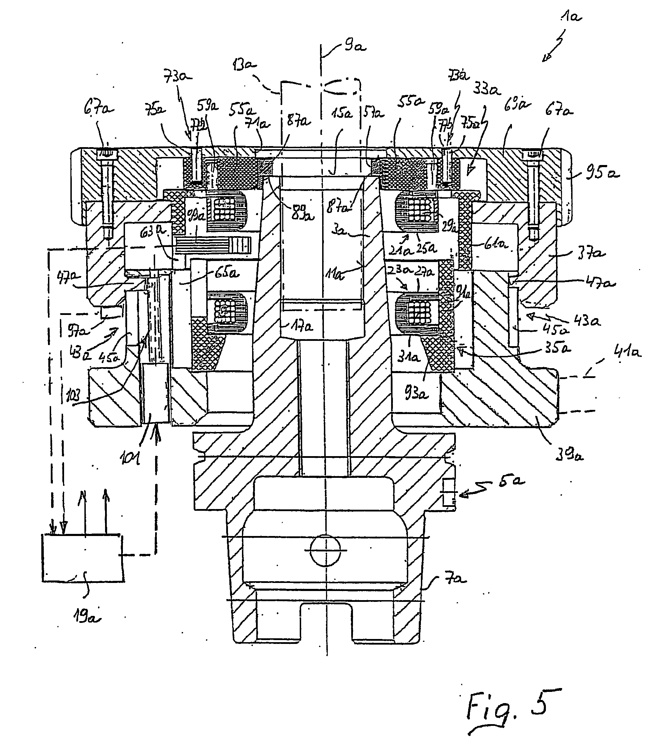

Figur 5 zeigt eine Induktionsspulen-Baueinheit 1a, die sich von der anhand der Figuren 1 bis 4 erläuterten Baueinheit 1 im Wesentlichen nur dadurch unterscheidet, dass an einem der Führungsringe 37a bzw. 39a, hier dem Führungsring 39a, ein Stellmotor 101 angeordnet ist, der über ein Getriebe 103 den anderen Führungsring, hier den Führungsring 37a um die Drehachse 9a rotierend antreibt. Der Stellmotor 101 ist Bestandteil eines Positionierantriebs, der die Ist-Position der beiden Führungsringe 37a, 39a relativ zueinander mittels des Positionssensors 97a erfasst. An dem Wechselstromgenerator 19a ist die Größe des zu erwärmenden Werkzeughalters 5a einstellbar und dementsprechend steuert der Wechselstromgenerator 19a den Stellmotor 101 in die dem Werkzeughalter 5a zugeordnete Position. Bei dem Stellmotor 101 kann es sich um einen Schrittmotor handeln, so dass die Anzahl der dem Schrittmotor zugeführten Treiberimpulse ein Maß für den Relativdrehwinkel der beiden Führungsringe 37a, 39a darstellt. Der Positionssensor 97a kann in diesem Fall entfallen oder aber durch Endschalter, die die Endlagenposition erfassen, ersetzt sein. Das Getriebe 103 kann herkömmlich gestaltet sein. Im vorliegenden Fall sitzt auf der Welle des Motors 101 ein Ritzel, welches mit einem Zahnkranz der Führungshülse 37a kämmt.

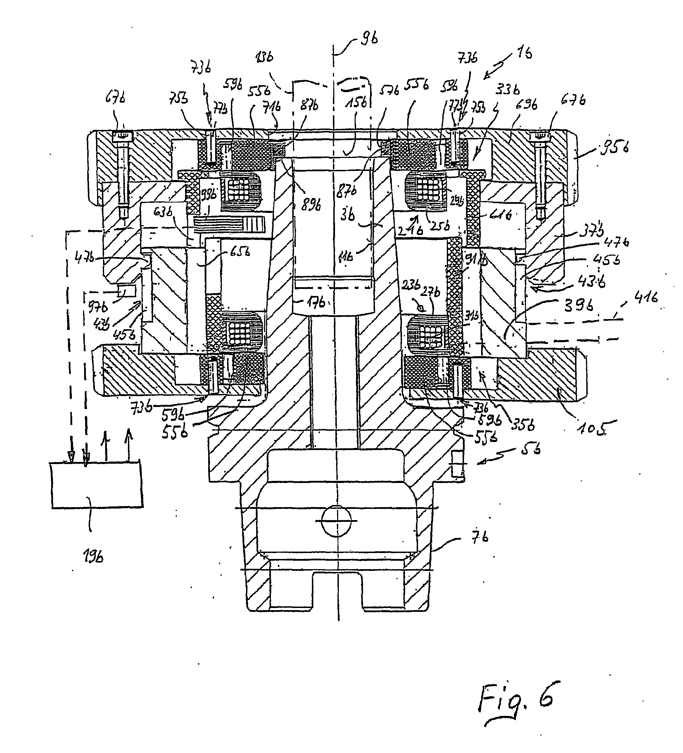

Figur 6 zeigt eine Induktionsspulen-Baueinheit 1b, die sich von der Induktionsspulen-Baueinheit 1 der Figuren 1 bis 4 im Wesentlichen nur dadurch unterscheidet, dass die Konzentratoreinheit 35b der zum freien Stirnende 15b axial abgewandten Spuleneinheit 23b entsprechend der Konzentratoranordnung 33b der Spuleneinheit 21b ausgebildet ist und anstelle des mit der Jochhülse 91 verbundenen Ringflansches 93 einen weiteren Satz Konzentratorelemente 55b umfasst, die über achsparallel zur Drehachse 9b angeordnete Achszapfen 59b an den Spulenkörper 27b oder der Jochhülse 91b oder dem Führungsring 39b schwenkbar geführt sind. An dem Führungsring 39b ist eine weitere Steuerscheibe 105 drehbar, jedoch axial fixiert gelagert, die über Schrägflächen-Nocken-Anordnungen 73b mit den weiteren Konzentratorelementen 55b gekuppelt ist. Die Konzentratorelemente 55b und die Schrägflächen-Nocken-Anordnungen 73b sind entsprechend den Komponenten 55 und 73 der Figuren 1 bis 4 gestaltet. Über das Steuerelement 105 können die Konzentratorelemente 55b der Konzentratoranordnung 35b unabhängig von den Konzentratorelementen der Konzentratoranordnung 33b an den Außenumfang des Werkzeughalters angenähert, vorzugsweise jedoch angelegt werden. Die vorzugsweise thermisch isolierenden erhabenen Bereiche 87b können an den Konzentratorelementen 55b der Konzentratoranordnung 35b entfallen oder aber an allen Konzentratorelementen 55b vorhanden sein.

Im Betrieb wird zunächst durch Einstellen der Steuerscheibe 69b die Konzentatoranordnung 33b auf den Durchmesser des Hüisenabschnitts 3b eingestellt, womit auch der axiale Abstand der Spuleneinheiten 21b und 23b justiert ist. Nach dem Aufsetzen der Baueinheit 1b auf den Werkzeughalter 5b werden auch die Konzentratorelemente 55b der Konzentratoranordnung 35b durch Drehen der Steuerscheibe 105 dem Werkzeughalter 5b angenähert.

Nicht näher dargestellt ist eine Variante, bei der die Führungsringe 37b und 39b mittels eines Stellmotors der anhand von Figur 5 erläuterten Art justiert werden, bevor dann manuell die Steuerscheibe 105 eingestellt wird. Die Steuerscheibe 105 kann gegebenenfalls mittels eines weiteren Stellmotors angetrieben werden.

## Patentansprüche

1. Induktionsspulen-Baueinheit zum Erwärmen eines eine Aufnahmeöffnung (11) für einen Schaft (13) eines Rotationswerkzeugs enthaltenden, frei endenden Hülsenabschnitts (3) eines Werkzeughalters (5), der den in der Aufnahmeöffnung (11) sitzenden Schaft (9) des Werkzeugs im Presssitz hält und bei Erwärmung freigibt, umfassend
- eine im Erwärmungsbetrieb den Hülsenabschnitt (3) umschließende Spulenanordnung (21, 23),
- eine zumindest in die Nähe des freien Endes (15) des Hülsenabschnitts (3) des Werkzeughalters (5) anordenbare Magnetfluss-Konzentratoranordnung (33) aus weichmagnetischem, elektrisch im Wesentlichen nicht leitendem Material auf der dem freien Ende (15) des Hülsenabschnitts (3) benachbarten Seite der Spulenanordnung (21,23),
**dadurch gekennzeichnet, dass** die Spulenanordnung (21, 23) zwei zueinander gleichachsig, jedoch mit betriebsmäßig änderbarem axialen Abstand voneinander angeordnete Spuleneinheiten aufweist oder/und dass eine zweite Magnetfluss-Konzentratoranordnung (35) aus weichmagnetischem, elektrisch im Wesentlichen nicht leitenden Material auf dem freien Ende (15) des Hülsenabschnitts (3) fernen Seite der Spulenanordnung (21, 23) vorgesehen ist, deren axialer Abstand zur erstgenannten Konzentratoranordnung (33) betriebsmäßig änderbar ist, und dass Einstellmittel (37, 39, 43) vorgesehen sind, die es erlauben, die axiale Position der beiden Spuleneinheiten (21, 23) oder/und der beiden Konzentratoranordnungen (33, 35) relativ zueinander einzustellen.

2. Induktionsspulen-Baueinheit nach Anspruch 1
**dadurch gekennzeichnet, dass** mit dem Werkzeughalter (5) zusammenwirkende Anschlagmittel (89) vorgesehen sind, die im Erwärmungsbetrieb die axiale Position der Spulenanordnung (21, 23) und der Konzentratoranordnung (33) relativ zu deren freien Ende (15) des Hülsenabschnitts (3) festlegen,

3. Induktionsspulen-Baueinheit nach Anspruch 2,
**dadurch gekennzeichnet, dass** eine (21) der beiden Spuleneinheiten (21, 23) oder/und eine (33) der beiden Konzentratoranordnungen (33, 35) eine feststehende axiale Position relativ zu den Anschlagmitteln (89) hat und dass mittels der Einstellmittel (37, 39, 43) die axiale Position der anderen (23) der beiden Spuleneinheiten (21, 23) oder/und der anderen (35) der beiden Konzentratoranordnungen (33, 35) relativ zu den Anschlagmitteln (89) wählbar einstellbar ist.

4. Induktionsspulen-Baueinheit nach Anspruch 2 oder 3,
**dadurch gekennzeichnet, dass** mittels der Einstellmittel (37, 39, 43). die andere Spuleneinheit (23) oder/und die andere Konzentratoranordnung (35) wählbar auf vorbestimmte axiale Positionen relativ zu den Anschlagmitteln (89) einstellbar sind.

5. Induktionsspulen-Baueinheit nach einem der Ansprüche 1 bis 4,
**dadurch gekennzeichnet, dass** die beiden Spuleneinheiten (21, 23) oder/und die beiden Konzentratoranordnungen (33, 35) relativ zueinander axial beweglich geführt sind und über wenigstens eine um die Drehachse herumführende, schraubenlinienartige Steuerfläche (45) axial aneinander abgestützt sind.

6. Induktionsspulen-Baueinheit nach Anspruch 5, **dadurch gekennzeichnet, dass** die wenigstens eine Steuerfläche (45) in vorbestimmten axialen Positionen der beiden Spuleneinheiten (21, 23) bzw. der beiden Konzentratoranordnungen (33, 35) relativ zueinander in achsnormalen Ebenen verlaufende Steuerflächenabschnitte (51) aufweisen, die die Spuleneinheiten (21, 23) bzw. die Konzentratoranordnungen (33, 35) axial arretieren.

7. Induktionsspulen-Baueinheit nach einem, der Ansprüche 1 bis 6, **dadurch gekennzeichnet, dass** die axiale Position der beiden Spuleneinheiten (21a, 23a) oder/und der beiden Konzentratoranordnungen (33a, 35a) relativ zueinander mittels eines Stellmotors änderbar ist.

8. Induktionsspulen-Baueinheit nach einem der Ansprüche 1 bis 7, **dadurch gekennzeichnet, dass** jede Spuleneinheit (21, 29) mit der auf ihrer Seite angeordneten Konzentratoranordnung (33, 35) axial fest verbunden ist.

9. Induktionsspulen-Baueinheit nach einem der Ansprüche 1 bis 8, **dadurch gekennzeichnet, dass** wenigstens eine der beiden Konzentratoranordnungen (33, 35) radial außerhalb der Spulenanordnung (21, 23) einen axial zur anderen Konzentratoranordnung vorstehenden Bereich (61, 91) umfasst, der mit der anderen Konzentratoranordnung im Wesentlichen im gesamten Bereich der axial änderbaren Positionen axial überlappt.

10. Induktionsspulen-Baueinheit nach Anspruch 9, **dadurch gekennzeichnet, dass** beide Konzentratoranordnungen (33, 35) aufeinander zu vorstehende Bereiche (61, 91) aufweisen und dass sich diese Bereiche (61, 91) axial überlappen.

11. Induktionsspulen-Baueinheit nach Anspruch 10, **dadurch gekennzeichnet, dass** die Bereiche als koaxial ineinander greifende Hülsenbereiche (61, 91) ausgebildet sind.

12. Induktionsspulen-Baueinheit nach einem, der Ansprüche 1 bis 11,
**dadurch gekennzeichnet, dass** zumindest die erste Konzentratoranordnung (33), vorzugsweise auch die zweite Konzentratoranordnung (35) in Umfangsrichtung um die Drehachse (9) herum mehrere radial über den Innenumfang der Induktionsspulenanordnung (21, 23) nach innen vorstehende relativ zueinander bewegliche Konzentratorelemente (55) aus dem weichmagnetischen, elektrisch im Wesentlichen nicht leitenden Material aufweist, deren zur Drehachse (9) hin gelegener radialer Überstand über den Innenumfang der Induktionsspulenanordnung (21, 23) betriebsmäßig änderbar ist.

13. Induktionsspulen-Baueinheit nach Anspruch 12, **dadurch gekennzeichnet, dass** die Konzentratorelemente (55) um parallel zur Drehachse (9) verlaufende Schwenkachsen (59) relativ zur Induktionsspulenanordnung (21, 23) schwenkbar sind.

14. Induktionsspulen-Baueinheit nach Anspruch 13, **dadurch gekennzeichnet, dass** die Konzentratorelemente (55) angenähert die Form von Scheiben haben, die mit einem ersten Rand (79) unter Bildung einer Durchtrittsöffnung (57) für den Werkzeugschaft (13) oder/und für den Hülsenabschnitt (3) des Werkzeughalters (5) der Drehachse gegenüberliegen und sich mit einem schräg zu dem ersten Rand (79) verlaufenden zweiten Rand (81) entlang des ersten Rands (79) eines in Umfangsrichtung benachbarten Konzentratorelements (55) erstrecken.

15. Induktionsspulen-Baueinheit nach Anspruch 14 oder nach den Merkmalen der Ansprüche 12 bis 14 in Verbindung mit dem Oberbegriff von Anspruch 1,
**dadurch gekennzeichnet, dass** sich der erste (79) und der zweite (81) Rand benachbarter Konzentratorelemente (55) zumindest auf einem Teil ihrer Länge in Umfangsrichtung überlappen, insbesondere verschränkt überlappen, und dass die Konzentratoranordnung (33) zwei Gruppen in Umfangsrichtung einander abwechselnder Konzentratoreiemente (55) umfasst, wobei die Anordnung so getroffen ist, dass der radiale Überstand der Konzentratorelemente (55) der ersten Gruppe über den Innenumfang der Induktionsspulenanordnung (21, 23) bei gleicher Winkelstellung größer ist als der radiale Überstand der Konzentrationselemente (55) der zweiten Gruppe.

16. Induktionsspulen-Baueinheit nach Anspruch 15, **dadurch gekennzeichnet, dass** die Konzentratorelemente (55) der ersten Gruppe an ihrem ersten Rand (79) die Anschlagmittel (89) bildende Anschlagelemente (87) für die axiale Positionierung der Konzentratoranordnung (33) und der mit ihr verbundenen Induktionsspulenanordnung (21) relativ zu dem Werkzeughalter (5) tragen.

17. Induktionsspulen-Baueinheit nach einem der Ansprüche 12 bis 16, **dadurch gekennzeichnet, dass** die Konzentratorelemente (55) mittels eines gemeinsamen, gleichachsig zur Induktionsspulenanordnung (21, 23) drehbaren Steuerelements (69), das über Steuerflächen-Nockenfolger-Anordnungen (73) mit den Konzentratorelementen (55) gekuppelt ist, verstellbar sind.

18. Induktionsspulen-Baueinheit nach Anspruch 17 in Verbindung mit Anspruch 4 oder 5,
**dadurch gekennzeichnet, dass** die beiden Spuleneinheiten (21, 23) drehfest, aber axial beweglich relativ zueinander geführt sind und dass das die Konzentratorelemente (55) einer (21) der beiden Spuleneinheiten (21, 23) stellende Steuerelement (69) drehfest mit der anderen (23) der beiden Spuleneinheiten (21, 23) verbunden ist.

19. Induktionsspulen-Baueinheit nach Anspruch 17 oder 18, **dadurch gekennzeichnet, dass** das Steuerelement (69) ein manuell betätigbares Handhabungselement (95) umfasst.

20. Induktionsspulen-Baueinheit nach Anspruch 17 oder 18, **dadurch gekennzeichnet, dass** das Steuerelement (69) mittels eines Stellmotors antreibbar ist.

21. Induktionsspulen-Baueinheit nach einem der Ansprüche 1 bis 20, **dadurch gekennzeichnet, dass** den Spuleneinheiten (21, 23) oder/und den Konzentratoranordnungen (33, 35) wenigstens ein Positionssensor (97) zugeordnet ist, der ein den axialen Abstand der Spuleneinheiten (21, 23) oder/und der Konzentratoranordnungen (33, 35) oder/und den radialen Überstand wenigstens der ersten Konzentratoranordnung (33) über den Innenumfang der Spulenanordnung (21, 23) repräsentierendes Signal erzeugt, und dass die Spuleneinheiten (21, 23) an einen Wechselstromgenerator (19) angeschlossen sind, dessen Stromstärke oder/und Stromeinschaltdauer oder/und Spannung abhängig von dem Signal steuerbar ist.

22. Induktionsspulen-Baueinheit nach einem der Ansprüche 1 bis 20, **dadurch gekennzeichnet, dass** der axiale Abstand der Spuleneinheiten (21, 23a) oder/und der Konzentratoranordnungen (33a, 35a) oder/und der radiale Überstand wenigstens der ersten Konzentratoranordnungen (33a) mittels wenigstens eines Positionierantriebs, insbesondere eines Schrittmotor-Positionierantriebs, einstellbar ist, und dass die Spuleneinheiten (21a, 23a) an einen Wechselstromgenerator (19a) angeschlossen sind, dessen Stromstärke oder/und Stromeinschaltdauer oder/und Spannung einstellbar ist und der den wenigstens einen Positionierantrieb abhängig von der Einstellung steuert.

23. Induktionsspulen-Baueinheit nach einem der Ansprüche 1 bis 22, **dadurch gekennzeichnet, dass** axial zwischen den Spuleneinheiten (21, 23) ein die Temperatur des Hülsenabschnitts (3) des Werkzeughalters (5) erfassender Temperatursensor (99) angeordnet ist.

## Claims

1. Induction coil unit for heating a sleeve portion (3) of a tool holder (5), said sleeve portion containing a receiving opening (11) for a shaft (13) of a rotational tool and having an open end, which tool holder holds the shaft (9) of the tool, which sits in the receiving opening, in a press fit and releases upon warming, comprising
- a coil arrangement (21, 23) which surrounds the sleeve portion (3) during the warming operation,
- a magnetic flux concentrator arrangement (33) which can be disposed at least in the vicinity of the open end (15) of the sleeve portion (3) of the tool holder (5) and is made of soft magnetic, electrically essentially non-conductive material on the side of the coil arrangement (21, 23) which is adjacent to the open end (15) of the sleeve portion (3),
**characterised in that** the coil arrangement (21, 23) has two coil units which are equiaxial relative to each other but at an axial spacing from each other which can be altered according to the operation, or/and **in that** a second magnet flux concentrator arrangement (35) which is made of soft magnetic, electrically essentially non-conductive material is provided on the side of the coil arrangement (21, 23) which is remote from the open end (15) of the sleeve portion (3), the axial spacing of which coil arrangement relative to the first-mentioned concentrator arrangement (33) can be altered according to the operation, and **in that** adjustment means (37, 39, 43) are provided which permit the axial position of the two coil units (21, 23) or/and of the two concentrator arrangements (33, 35) to be adjusted relative to each other.

2. Induction coil unit according to claim 1,
**characterised in that**
limit stop means (89) which cooperate with the tool holder (5) are provided and, in the heating operation, fix the axial position of the coil arrangement (21, 23) and of the concentrator arrangement (33) relative to the open end (15) thereof of the sleeve portion (3).

3. Induction coil unit according to claim 2,
**characterised in that**
one (21) of the two coil units (21, 23) or/and one (33) of the two concentrator arrangements (33, 35) has a stationary axial position relative to the limit stop means (89) and **in that**, by means of the adjustment means (37, 39, 43), the axial position of the other (23) of the two coil units (21, 23) or/and of the other (35) of the two concentrator arrangements (33, 35) relative to the limit stop means (89) can be adjusted optionally.

4. Induction coil unit according to claim 2 or 3,
**characterised in that**,
by means of the adjustment means (37, 39, 43), the other coil unit (23) or/and the other concentrator arrangement (35) can be adjusted optionally to prescribed axial positions relative to the limit stop means (89).

5. Induction coil unit according to one of the claims 1 to 4, **characterised in that**
the two coil units (21, 23) or/and the two concentrator units (33, 35) are guided moveably, axially relative to each other and are supported axially one on the other via at least one control surface (45) which guides about the axis of rotation and is of the helical line type.

6. Induction coil unit according to claim 5,
**characterised in that**
the at least one control surface (45) has control surface portions (51) which extend, in prescribed axial positions of the two coil units (21, 23) or of the two concentrator arrangements (33, 35), relative to each other in planes normal to the axis and axially lock the coil units (21, 23) or the concentrator arrangements (33, 35).

7. Induction coil unit according to one of the claims 1 to 6,
**characterised in that**
the axial position of the two coil units (21a, 23a) or/and of the two concentrator arrangements (33a, 35a) relative to each other can be altered by means of a servomotor.

8. Induction coil unit according to one of the claims 1 to 7,
**characterised in that** each coil unit (21, 29) is connected securely axially to the concentrator arrangement (33, 35) which is disposed on the side thereof.

9. Induction coil unit according to one of the claims 1 to 8,
**characterised in that**
at least one of the two concentrator arrangements (33, 35) comprises, radially outwith the coil arrangement (21, 23), a region (61, 91) which projects axially relative to the other concentrator arrangement and overlaps axially with the other concentrator arrangement essentially in the entire region of the axially alterable positions.

10. Induction coil unit according to claim 9,
**characterised in that**
both concentrator arrangements (33, 35) have regions (61, 91) to project one towards the other, and **in that** these regions (61, 91) overlap axially.

11. Induction coil unit according to claim 10,
**characterised in that**
the regions are configured as sleeve regions (61, 91) which engage coaxially one in the other.

12. Induction coil unit according to one of the claims 1 to 11,
**characterised in that**
at least the first concentrator arrangement (33), preferably also the second concentrator arrangement (35), has, in the circumferential direction about the axis of rotation (9), a plurality of concentrator elements (55) which project radially inwardly over the inner circumference of the induction coil arrangement (21, 23), are moveable relative to each other and are made of the soft magnetic, electrically essentially non-conductive material, the radial projection positioned towards the axis of rotation (9) of which concentrator elements over the inner circumference of the induction coil arrangement (21, 23) can be altered according to the operation.

13. Induction coil unit according to claim 12,
**characterised in that**
the concentrator elements (55) can be pivoted relative to the induction coil arrangement (21, 23) about pivot axes (59) which extend parallel to the axis of rotation (9).

14. Induction coil unit according to claim 13,
**characterised in that**
the concentrator elements (55) have approximately the shape of discs, which are situated with a first edge (79) opposite the axis of rotation with formation of a passage opening (57) for the tool shaft (13) or/and for the sleeve portion (3) of the tool holder (5), and extend, with a second edge (81) which extends diagonally relative to the first edge (79), along the first edge (79) of a concentrator element (55) which is adjacent in the circumferential direction.

15. Induction coil unit according to claim 14 or according to the features of claims 12 to 14 in conjunction with the preamble of claim 1,
**characterised in that**
the first (79) and the second (81) edge of adjacent concentrator elements (55) overlap at least on a part of their length in the circumferential direction, in particular overlapping interlaced, and **in that** the concentrator arrangement (33) comprises two groups of concentrator elements (55) which alternate mutually in the circumferential direction, the arrangement being such that the radial projection of the concentrator elements (55) of the first group over the inner circumference of the induction coil arrangement (21, 23), at the same angle, is greater than the radial projection of the concentrator elements (55) of the second group.

16. Induction coil unit according to claim 15,
**characterised in that**
the concentrator elements (55) of the first group carry on the first edge (79) thereof limit stop elements (87), which form the limit stop means (89), for the axial positioning of the concentrator arrangement (33) and of the induction coil arrangement (21), connected thereto, relative to the tool holder (5).

17. Induction coil unit according to one of the claims 12 to 16,
**characterised in that**
the concentrator elements (55) can be displaced by means of a common rotatable control element (69) which is equiaxial relative to the induction coil arrangement (21, 23) and is coupled to the concentrator elements (55) via control surface cam follower arrangements (73).

18. Induction coil unit according to claim 17 in conjunction with claim 4 or 5,
**characterised in that**
the two coil units (21, 23) are non-rotatable, but guided axially moveably relative to each other, and **in that** the control element (69) which positions the concentrator elements (55) of one (21) of the two coil units (21, 23) is connected non-rotatably to the other (23) of the two coil units (21, 23).

19. Induction coil unit according to claim 17 or 18,
**characterised in that**
the control element (69) comprises a manually actuatable handling element (95).

20. Induction coil unit according to claim 17 or 18,
**characterised in that**
the control element (69) can be driven by means of a servomotor.

21. Induction coil unit according to one of the claims 1 to 20,
**characterised in that**
at least one position sensor (97) is assigned to the coil units (21, 23) or/and to the concentrator arrangements (33, 35), which position sensor produces a signal which represents the axial spacing of the coil units (21, 23) or/and of the concentrator arrangements (33, 35) or/and the radial projection at least of the first concentrator arrangement (33) over the inner circumference of the coil arrangement (21, 23), and **in that** the coil units (21, 23) are connected to an alternating current generator (19), the current strength or/and the duration of the current being switched on or/and voltage of which can be controlled as a function of the signal.

22. Induction coil unit according to one of the claims 1 to 20,
**characterised in that**
the axial spacing of the coil units (21, 23a) or/and of the concentrator arrangements (33a, 35a) or/and the radial projection at least of the first concentrator arrangements (33a) can be adjusted by means of at least one positioning drive, in particular by means of a step motor positioning drive,
and **in that** the coil units (21a, 23a) are connected to an alternating current generator (19a), the current strength or/and the duration of the current being switched on or/and voltage of which can be adjusted and which controls the at least one positioning drive as a function of the adjustment.

23. Induction coil unit according to one of the claims 1 to 22,
**characterised in that**,
axially between the coil units (21, 23), a temperature sensor (99) which detects the temperature of the sleeve portion (3) of the tool holder (5) is disposed.

## Revendications

1. Ensemble de bobines d'induction servant à chauffer une partie de douille (3) d'un porte-outil (5) contenant une ouverture de logement (11) pour une tige (13) d'un outil rotatif et se terminant librement, porte-outil qui maintient, en ajustement sans jeu, la tige (9) de l'outil fixée dans l'ouverture de logement (11) et qu'il libère lors du chauffage, comprenant :
- un agencement de bobines (21, 23) entourant la partie de douille (3) au cours du fonctionnement en mode chauffage,
- un agencement de concentrateurs à flux magnétique (33) pouvant être disposé au moins à proximité de l'extrémité libre (15) de la partie de douille (3) du porte-outil (5) et réalisé dans un matériau magnétique doux sensiblement non électroconducteur, sur le côté de l'agencement de bobines (21, 23) contigu à l'extrémité libre (15) de la partie de douille (3),
**caractérisé en ce que** l'agencement de bobines (21, 23) comporte deux bobines unitaires équiaxes l'une par rapport à l'autre mais disposées en étant espacées l'une de l'autre suivant une distance axiale modifiable selon le fonctionnement, ou / et **en ce qu'**il est prévu un deuxième agencement de concentrateurs à flux magnétique (35) réalisé dans un matériau magnétique doux sensiblement non électroconducteur, sur le côté de l'agencement de bobines (21, 23) éloigné de l'extrémité libre (15) de la partie de douille (3), agencement de bobines dont la distance axiale par rapport à l'agencement de concentrateurs (33) cité en premier est modifiable selon le fonctionnement, et **en ce qu'**il est prévu des moyens de réglage (37, 39, 43) qui permettent de régler la position des deux bobines unitaires (21, 23) ou / et des deux agencements de concentrateurs (33, 35), l'un ou l'une par rapport à l'autre.

2. Ensemble de bobines d'induction selon la revendication 1, **caractérisé en ce qu'**il est prévu des moyens formant butées (89) agissant de façon conjointe avec le porte-outil (5), butées qui, au cours du fonctionnement en mode chauffage, fixent la position axiale de l'agencement de bobines (21, 23) et de l'agencement de concentrateurs (33) par rapport à l'extrémité libre (15) de la partie de douille (3).

3. Ensemble de bobines d'induction selon la revendication 2, **caractérisé en ce que** l'une (21) des deux bobines unitaires (21, 23) ou / et l'un (33) des deux agencements de concentrateurs (33, 35) a une position axiale fixe par rapport aux moyens formant butée (89), et **en ce que** la position axiale de l'autre (23) des deux bobines unitaires (21, 23) ou / et de l'autre (35) des deux agencements de concentrateurs (33, 35) est, à l'aide des moyens de réglage (37, 39, 43), réglable au choix , par rapport aux moyens formant butées (89).

4. Ensemble de bobines d'induction selon la revendication 2 ou 3, **caractérisé en ce que** l'autre bobine unitaire (23) ou / et l'autre agencement de concentrateurs (35) sont, à l'aide des moyens de réglage (37, 39, 43), réglables au choix, sur des positions axiales prédéterminées par rapport aux moyens formant butées (89).

5. Ensemble de bobines d'induction selon l'une des revendications 1 à 4, **caractérisé en ce que** les deux bobines unitaires (21, 23) ou / et les deux agencements de concentrateurs (33, 35) sont guidé(e)s de façon mobile, axialement, l'un ou l'une par rapport à l'autre, et sont supporté(e)s l'un ou l'une contre l'autre, axialement, par au moins une surface de commande (45), de forme hélicoïdale, tournant autour de l'axe de rotation.

6. Ensemble de bobines d'induction selon la revendication 5, **caractérisé en ce que** la surface de commande (45), au moins au nombre de un, dans des positions axiales prédéfinies des deux bobines unitaires (21, 23) ou des deux agencements de concentrateurs (33, 35), comporte des parties de surface de commande (51) s'étendant, l'une par rapport à l'autre, dans des plans perpendiculaires à l'axe, parties de surface de commande qui arrêtent axialement les bobines unitaires (21, 23) ou les agencements de concentrateurs (33, 35).

7. Ensemble de bobines d'induction selon l'une des revendications 1 à 6, **caractérisé en ce que** la position axiale des deux bobines unitaires (21a, 23a) ou / et des deux agencements de concentrateurs (33a, 35a), l'un ou l'une par rapport à l'autre, est modifiable au moyen d'un servomoteur.

8. Ensemble de bobines d'induction selon l'une des revendications 1 à 7, **caractérisé en ce que** chaque bobine unitaire (21, 29) est reliée fixement, de façon axiale, à l'agencement de concentrateurs (33, 35) disposé sur le côté de ladite bobine unitaire.

9. Ensemble de bobines d'induction selon l'une des revendications 1 à 8, **caractérisé en ce qu'**au moins l'un des deux agencements de concentrateurs (33, 35) comprend, à l'extérieur de l'agencement de bobines (21, 23), dans le sens radial, une zone (61, 91) faisant saillie axialement par rapport à l'autre agencement de concentrateurs, zone qui, avec l'autre agencement de concentrateurs, chevauche axialement, sensiblement dans toute la plage des positions modifiables axialement.

10. Ensemble de bobines d'induction selon la revendication 9, **caractérisé en ce que** les deux agencements de concentrateurs (33, 35) comportent des zones (61, 91) faisant saillie l'une sur l'autre, et **en ce que** ces zones (61, 91) se chevauchent axialement.

11. Ensemble de bobines d'induction selon la revendication 10, **caractérisé en ce que** les zones sont configurées comme des zones de douille (61, 91) s'imbriquant de façon coaxiale.

12. Ensemble de bobines d'induction selon l'une des revendications 1 à 11, **caractérisé en ce qu'**au moins le premier agencement de concentrateurs (33), de préférence aussi le deuxième agencement de concentrateurs (35), comportent, tout autour de l'axe de rotation (9) dans la direction circonférentielle, plusieurs éléments de concentrateurs (55) mobiles les uns par rapport aux autres et faisant saillie, vers l'intérieur, sur la circonférence intérieure de l'agencement de bobines d'induction (21, 23), éléments de concentrateurs réalisés dans un matériau magnétique doux sensiblement non électroconducteur et dont le dépassement radial en direction de l'axe de rotation (9) est modifiable, selon le fonctionnement, sur la circonférence intérieure de l'agencement de bobines d'induction (21, 23).

13. Ensemble de bobines d'induction selon la revendication 12, **caractérisé en ce que** les éléments de concentrateurs (55) peuvent pivoter par rapport à l'agencement de bobines d'induction (21, 23), autour d'axes de pivotement (59) s'étendant parallèlement à l'axe de rotation (9).

14. Ensemble de bobines d'induction selon la revendication 13, **caractérisé en ce que** les éléments de concentrateurs (55) ont presque la forme de disques qui, par un premier bord (79), en formant une ouverture de passage (57) pour la tige d'outil (13) ou / et pour la partie de douille (3) du porte-outil (5), font face à l'axe de rotation, et par un deuxième bord (81) s'étendant en oblique par rapport au premier bord (79), s'étendent le long du premier bord (79) d'un élément de concentrateur contigu (55) dans la direction circonférentielle.

15. Ensemble de bobines d'induction selon la revendication 14 ou selon les caractéristiques des revendications 12 à 14, en relation avec le préambule de la revendication 1, **caractérisé en ce que** le premier (79) et le deuxième (81) bord d'éléments de concentrateurs contigus (55) se chevauchent au moins sur une partie de leur longueur, dans la direction circonférentielle, en particulier se chevauchent de façon entrelacée, et **en ce que** l'agencement de concentrateurs (33) comprend deux groupes d'éléments de concentrateurs (55) alternant les uns les autres dans la direction circonférentielle, où l'agencement est obtenu de manière telle, que le dépassement radial des éléments de concentrateurs (55) du premier groupe, sur la circonférence intérieure de l'agencement de bobines d'induction (21, 23), soit, à position angulaire identique, plus grand que le dépassement radial des éléments de concentrateurs (55) du deuxième groupe.

16. Ensemble de bobines d'induction selon la revendication 15, **caractérisé en ce que** les éléments de concentrateurs (55) du premier groupe supportent, sur leur premier bord (79), des éléments de butée (87) formant les butées (89) pour le positionnement axial de l'agencement de concentrateurs (33) et de l'agencement de bobines d'induction (21) relié audit agencement de concentrateurs, par rapport au porte-outil (5).

17. Ensemble de bobines d'induction selon l'une des revendications 12 à 16, **caractérisé en ce que** les éléments de concentrateurs (55) sont réglables au moyen d'un élément de commande (69) rotatif commun, équiaxe par rapport à l'agencement de bobines d'induction (21, 23), élément de commande qui est couplé aux éléments de concentrateurs (55), par des agencements (73) de suiveurs de cames de surfaces de commande.

18. Ensemble de bobines d'induction selon la revendication 17, en relation avec la revendication 4 ou 5, **caractérisé en ce que** les deux bobines unitaires (21, 23) sont guidées en étant fixes en rotation mais mobiles axialement l'une par rapport à l'autre, et **en ce que** l'élément de commande (69) réglant les éléments de concentrateurs (55) de l'une (21) des deux bobines unitaires (21, 23) est relié, fixe en rotation, à l'autre (23) des deux bobines unitaires (21, 23).

19. Ensemble de bobines d'induction selon la revendication 17 ou 18, **caractérisé en ce que** l'élément de commande (69) comprend un élément de maniement (95) actionnable manuellement.

20. Ensemble de bobines d'induction selon la revendication 17 ou 18, **caractérisé en ce que** l'élément de commande (69) peut être entraîné au moyen d'un servomoteur.

21. Ensemble de bobines d'induction selon l'une des revendications 1 à 20, **caractérisé en ce qu'**au moins un capteur de position (97) est affecté aux bobines unitaires (21, 23) ou / et aux agencements de concentrateurs (33, 35), capteur de position qui produit un signal représentant la distance axiale des bobines unitaires (21, 23) ou / et des agencements de concentrateurs (33, 35) ou / et le dépassement radial au moins du premier agencement de concentrateurs (33) sur la circonférence intérieure de l'agencement de bobines (21, 23), et **en ce que** les bobines unitaires (21, 23) sont raccordées à un générateur de courant alternatif (19) dont l'intensité ou / et la durée de mise sous tension du courant ou / et la tension est réglable en fonction du signal.

22. Ensemble de bobines d'induction selon l'une des revendications 1 à 20, **caractérisé en ce que** la distance axiale des bobines unitaires (21a, 23a) ou / et des agencements de concentrateurs (33a, 35a) ou / et la distance radiale au moins des premiers agencements de concentrateurs (33a) est réglable au moyen au moins d'une commande de positionnement, en particulier d'une commande de positionnement à moteur pas à pas, et **en ce que** les bobines unitaires (21a, 23a) sont connectées à un générateur de courant alternatif (19a) dont l'intensité ou / et la durée de mise sous tension du courant ou / et la tension est réglable, et qui, en fonction du réglage, régule la commande de positionnement au moins au nombre de un.

23. Ensemble de bobines d'induction selon l'une des revendications 1 à 22, **caractérisé en ce qu'**un capteur de température (99) détectant la température de la partie de douille (3) du porte-outil (5) est disposé axialement entre les bobines unitaires (21, 23).
